# EUROPEAN PATENT SPECIFICATION

(11) **EP 3 360 637 B1**
(45) Date of publication and mention of the grant of the patent: **28.02.2024**
(21) Application number: 18154449.5
(22) Date of filing: 31.01.2018
(51) Int. Cl.: B23K 35/22, B23K 35/02, B23K 1/00, B23K 1/20, B23P 6/00, F01D 5/18, B23K 31/02, F01D 5/00

(54) **METHOD AND INSERT MATERIAL FOR BLOCKING FLOW OF SOLDER MATERIAL INTO A VOID**
VERFAHREN UND EINSETZMATERIAL ZUR BLOCKIERUNG DES FLUSSES VON LOTMATERIAL IN EINEN HOHLRAUM
PROCÉDÉ ET MATÉRIAU D'INSERT PERMETTANT DE BLOQUER L'ÉCOULEMENT D'UN MATÉRIAU DE SOUDURE DANS UN VIDE

(30) Priority: 08.02.2017 CN 201710069523
(43) Date of publication of application: 15.08.2018
(73) Proprietor: General Electric Technology GmbH, 5400 Baden (CH)
(72) Inventor: ZHOU, Hong, Shanghai, Shanghai 201203 (CN); ZHANG, Liming, Greenville, SC South Carolina (US); GAO, XUBIN, Shanghai, Shanghai 201203 (CN); GU, Yanfei, Shanghai, Shanghai 201203 (CN); XU, Wusheng, Shanghai, Shanghai 201203 (CN); ZHOU, Ying, Hebei, 066206 (CN)
(74) Representative: Novagraaf Group

(56) References cited:
- EP-A1- 1 987 902
- EP-A2- 1 177 852
- WO-A1-2005/056879
- JP-A- 2009 191 840
- US-A1- 2008 274 613

## Description

### BACKGROUND

This disclosure relates generally to a soldering process, and more particularly to a method and inserted material for blocking flow of solder material into a void of a component during soldering process.

After a period of service, cracks are generated on a component of a gas turbine. The cracks can be repaired by brazing operation. However, due to the cooling holes existing on the component, the braze flow during the brazing operation should only flow into the cracks, but should not flow into the cooling holes to block the original cooling holes. The cracks may be generated in two cases. In one case, the cracks produced beside the cooling holes. In other case, the cracks may connect with or extend between the cooling holes.

Conventionally, insert material of large sized particles is used, but this insert material has defects, so as not ideally to be used for blocking braze alloy from flowing into the cooling holes. First, this insert material is porous, the molten braze alloy will easily flow into cooling holes and fuse into a ball to reside in the cooling holes. Second, this insert material is not extendable to fill the entire cooling holes. Grooves are easily appeared within the insert material and spaces are generated between the insert material and the inner surface of the cooling hole, which can allow the molten braze alloy flowing therein.

Therefore, new technologies need to be developed to solve the problems.

WO 2005/056879 A1 discloses a high-temperature coating system for deposition on surfaces of gas turbine or aircraft engine components, comprising a substantially ductile binder matrix and hard nano-sized ceramic particles disposed within the binder matrix. In some embodiments, the coating system further comprises hard micron-sized ceramic particles disposed within the binder matrix with about 70% of the overall volume percent including the nano-sized ceramic particles and about 30% of the overall volume percent including the micron-sized ceramic particles.

US 2008/0274613 A1 discloses a method for blocking flow of solder material into a void of a component during soldering operation, comprising: preparing insert material in form of a paste comprising micro-sized ceramic particles, nano-sized ceramic particles, and a binder; charging the insert material into the void; drying the insert material in the void which seals the void; performing soldering operation; and removing the insert material after soldering operation. In a variant, the ceramic material is pretreated to form a partially crosslinked filling body in the form of a pin, knob, etc., which is then inserted into the void before performing soldering operation.

EP 1 987 0902 A1 discloses a method for blocking flow of brazing material into a void of a component during soldering operation that uses a graphitic preform as a stopoff during the subsequent brazing process. The graphitic preform may be coated with a layer of a protective material (e.g. aluminum oxide) to reduce any potential reaction with the brazing material.

EP 1 177 852 A2 discloses a method which uses a stopoff slurry comprising an oxide powder and a binder, which is inserted into a component cavity and dried to form a hardened stopoff barrier to flow of brazing material.

JP 2009 191840 A discloses a method for blocking flow of solder material into a void of a component during soldering operation. A pin is coated with a metal oxide paste and inserted into a void. Subsequently, a soldering operation is performed and the coated pin is removed after the soldering operation.

### BRIEF DESCRIPTION

In one embodiment, the present invention provides an insert material for blocking flow of solder material into a void of a component during soldering operation, which comprises micro-sized metal oxide particles; nano-sized metal oxide particles; and a binder. The insert material is in the form of a slurry comprising water. The micro-sized metal oxide particles are micro-sized aluminum oxide particles and the nano-sized metal oxide particles are nano-sized aluminum oxide particles. The ratio of the nano-sized aluminum oxide particles and the micro-sized aluminum oxide particles is less than one third and is more than zero by weight.

In another embodiment, the present invention provides a method for blocking flow of solder material into a void of a component during soldering operation, which comprises preparing an insert material in the form of a slurry comprising micro-sized metal oxide particles, nano-sized metal oxide particles, and a binder, wherein the insert material is in the form of a slurry comprising water, the micro-sized metal oxide particles are micro-sized aluminum oxide particles and the nano-sized metal oxide particles are nano-sized aluminum oxide particles, and the ratio of the nano-sized aluminum oxide particles and the micro-sized aluminum oxide particles is less than one third and is more than zero by weight; charging the insert material into the void; drying the insert material in the void which seals the void; performing soldering operation; and removing the insert material after soldering operation.

In another embodiment, the present invention provides a method for blocking flow of solder material into a void of a component during soldering operation, comprising preparing an insert material in the form of a slurry comprising micro-sized metal oxide particles, nano-sized metal oxide particles, and binder; preparing a pin; coating the pin with the insert material; drying the insert material on the pin; inserting the pin coated with the insert material into the void; performing soldering operation; and removing the pin coated with insert material after soldering operation.

### DRAWINGS

These and other features, aspects, and advantages of the present disclosure will become better understood when the following detailed description is read with reference to the accompanying drawings in which like characters represent like parts throughout the drawings, wherein:
Fig. 1 is a diagrammatical representation of a component of a gas turbine with voids and cracks for illustrating an application of an embodiment of the present disclosure;
Fig. 2 is a diagrammatical representation of insert material in accordance with an embodiment of the present invention;
Fig. 3 is a diagrammatical representation of insert material in accordance with another embodiment not covered by the present invention.

### DETAILED DESCRIPTION

Embodiments of the present disclosure will be described herein below with reference to the accompanying drawings. In the following description, well-known functions or constructions are not described in detail to avoid obscuring the disclosure in unnecessary detail.

Unless defined otherwise, technical and scientific terms used herein have the same meaning as is commonly understood by one of ordinary skill in the art to which this invention belongs. The terms "a" and "an" do not denote a limitation of quantity, but rather denote the presence of at least one of the referenced items. The term "or" is meant to be inclusive and mean either or all of the listed items. The use of "including," "comprising" or "having" and variations thereof herein are meant to encompass the items listed thereafter and equivalents thereof as well as additional items.

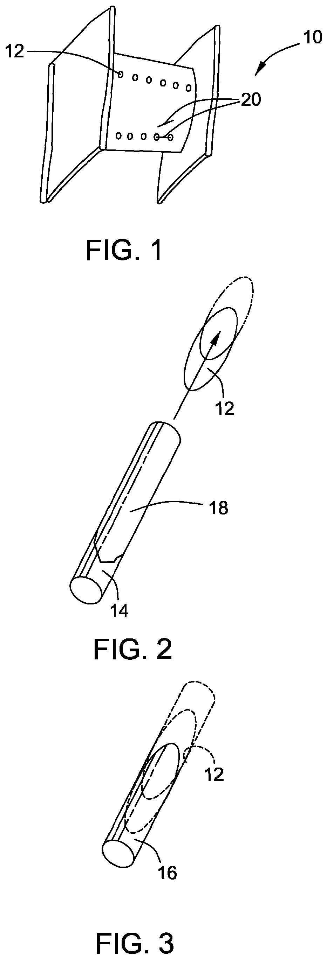

Referring to Fig. 1 of the drawings, a component 10 of a gas turbine with voids 12 and cracks 20 is shown. The component of a gas turbine usually has voids, such as cooling holes, original grooves thereon to perform a normal operating function. After a period of service, the component 10 of a gas turbine experienced hostile environment, and produces undesirable cracks thereon. These cracks need to be repaired by using soldering operation, such as brazing operation, so that the solder material, such as braze alloy, is melted and flows into the cracks. Therefore, the component of the gas turbine is repaired. However, in order to maintain the component of the gas turbine function as usual, the molten braze alloy must not flow into the voids, such as cooling holes, original grooves, cavities, and so on, but only should flow into the cracks that need to be repaired.

The present disclosure provides an insert material for blocking flow of solder material into a void 12 of a component 10 during soldering operation comprising micro-sized metal oxide particles, nano-sized metal oxide particles, and binder. The metal oxide is refractory. Wherein the metal oxide is selected at least one from aluminum oxide (Al₂O₃), zirconium oxide (ZrO₂), yttrium oxide (Y₂O₃), magnesium oxide (MgO) and rare earth oxide, such as lanthanum (La) oxide and cerium (Ce) oxide. With the presence of the nano-sized metal oxide, preferably listed before, the density of the insert material is increased and the porosity of the insert material is reduced, so as to avoid the solder material to flow inside the insert material.

In one aspect of the invention, as claimed in independent claims 1 and 3, aluminum oxide or alumina is used. The insert material comprises micro-sized aluminum oxide particles, nano-sized aluminum oxide particles, and a binder. The nano-sized aluminum oxide particle is preferably 0.05 micro meter in diameter. The binder comprises organic binder, such as methylcellulose, a mixture of cellulose and terpinol, a mixture of cellulose and glycerol. The insert material comprises water.

In the aspect of the invention mentioned before, a method for blocking flow of solder material into a void of a component during soldering operation, comprises steps of preparing insert material in form of slurry comprising micro-sized aluminum oxide particles, nano-sized aluminum oxide particles, and a binder; charging the insert material into the void; drying the insert material in the void which seals the void; performing soldering operation; and removing the insert material after soldering operation.

The insert material in the form of a slurry which comprises water. The ratio of the nano-sized aluminum oxide particles and micro-sized aluminum oxide is less than one third and is more than zero by weight, and all subranges therebetween. Because when nano-sized aluminum oxide particles are too much, the composition of the insert material will be too dense, and not easy to be removed after brazing operation.

The insert material may comprise a surfactant. The surfactant can be any one of the water soluble non-ionic surfactant, such as wetting agent. In one example, the insert material comprises 150g micro-sized aluminum oxide particles, and 10-100g nano-sized aluminum oxide sol, comprising 20% nano-sized aluminum oxide particles, and other component, including 5-10% binder, 0.1-0.5% wetting agent, and water, by weight of total weight of the sol. Preferably, the 25g nano-sized aluminum oxide sol is used to be combined with 150g micro-sized aluminum oxide particles, wherein the ratio of the nano-sized aluminum oxide and micro-sized aluminum oxide is one thirtieth by weight. With this ratio, the insert material is not harder to be removed after soldering operation because of increased density, but it is easier to be removed.

The form of a slurry means the form of a semisolid state, including state of slurry, paste and the like. The insert material is charged or injected into the voids. Wait until the insert material dries inside the void. Because the existence of the surfactant, the insert material is extendable inside void to the inner surface of the void, so that the void is more ideally filled with insert material to avoid the molten braze alloy flowing inside the void.

During the soldering operation, such as brazing operation, the molten braze alloy will flow into and fill the cracks to repair the cracks, but won't flow into the voids because of the blocking of the insert material.

After a soldering operation, the insert material is removed by compression air or diluted acid, or manual force with a stick. The diluted acid can dissolve the insert material after solder operation, but won't dissolve or affect other part of the component, so that only the insert material is removed. Working staff can also use a toothpick to manually apply force to the insert material to remove it from the void. Because of the combination of micro-sized aluminum oxide particles and nano-sized aluminum oxide particles, the insert material can be more easily removed, or in another word, the insert material can be removed faster than conventional method.

This method is suitable for the case when the cracks are generated beside the voids. However, if the cracks connect with or extend between the voids, and when charging the insert material, the insert material may flow into the voids through cracks, which is not desirable.

Referring to Fig. 2 of the drawings, in another aspect of the invention, as claimed in further independent claim 5, a method for blocking flow of solder material into a void of a component during soldering operation comprises the steps of preparing an insert material in the form of a slurry comprising micro-sized metal oxide particles, nano-sized metal oxide particles, and a binder; preparing a pin 14; coating the pin with the insert material 18; drying the insert material 18 on the pin 14; inserting the pin 14 coated with the insert material 18 into the void 12; performing a soldering operation; and removing the pin 14 coated with insert material 18 after the soldering operation.

The insert material, which is in the form of a slurry or paste, is the same as the insert material described above. The pin can be steel or metal or alloy or ceramic material with a melting point higher than brazing temperature (1065°C) and chemically inert to the insert material. In this embodiment, a pin is made of stainless steel.

The cross section of the pin is smaller than the size of the void. Then coat the pin with insert material described above to a shape and size corresponding to the void to be inserted. Insert the pin coated with the insert material into the void, so that the void is filled completely. During the soldering operation, the molten braze alloy will flow into the cracks to repair the cracks of the component, but the void is blocked by the pin coated with insert material.

The soldering operation is performed in the same manner as in other embodiments. After soldering operation, the pin coated with the inserted material is removed by compression air or manual force with a stick, which is described above. When the cracks connect or extend between the voids, by using this embodiment, the molten braze alloy won't flow into the voids, but only repair the cracks. The embodiment is also suitable when the cracks are generated beside the voids.

In another embodiment, which is not claimed as such, referring to Fig. 3 of the drawings, a method for blocking flow of solder material into a void of a component during soldering operation comprises the steps of shaping an insert material comprising micro-sized metal oxide particles, nano-sized metal oxide particles and a binder into a solid article 16 in a shape and size corresponding to a void 12 of a component; inserting the solid article 16 in the void 12; performing a soldering operation; and removing the insert material after the soldering operation.

The step of shaping an insert material comprises a step of drying the insert material in form of slurry in air at 120 °C to form a solid article in a shape and size corresponding to a void of a component to be brazed so as to be inserted into the void of the component, which means the void is completly filled with the solid article without grooves. The solid article is formed as a stick with a circular cross section in one example. The diameter of the cross section is slightly larger than the diameter of the void so that the insert material can completely fill the void.

In this embodiment, the insert material in the form of a slurry is the same as in the above embodiment. The insert material comprises micro-sized metal oxide particles, nano-sized metal oxide particles and a binder, and further comprises surfactant and water. The binder and the surfactant are also the same as the above-mentioned material.

After the soldering operation, such as brazing operation, the solid article made of the insert material can also be removed by the method described above, such as by compression air or diluted acid, or manual force with a stick. When the cracks connect or extend between the voids, by using this embodiment, the molten braze alloy won't flow into the voids, but only repair the cracks. The embodiment is also suitable when the cracks are generated beside the voids.

This insert material is chemically inert to alloy at high temperature and with a different CTE (Coefficient of thermal expansion) from alloy. With a dense structure and the chemical property, this material helps prevent fused braze alloy to flow into the cooling holes or cavities.

While the disclosure has been illustrated and described in typical embodiments, it is not intended to be limited to the details shown, since various modifications and substitutions can be made without departing in any way from the spirit of the present disclosure. As such, further modifications and equivalents of the disclosure herein disclosed may occur to persons skilled in the art and all such modifications and equivalents are believed to be within the scope of the disclosure as defined by the following claims

## Claims

1. An insert material (18) for blocking flow of solder material into a void (12) of a component (10) during soldering operation, comprising:
micro-sized metal oxide particles;
nano-sized metal oxide particles; and
a binder;
**characterized in that**
the insert material is in the form of a slurry comprising water;
the micro-sized metal oxide particles are micro-sized aluminum oxide particles and the nano-sized metal oxide particles are nano-sized aluminum oxide particles; and
the ratio of the nano-sized aluminum oxide particles and the micro-sized aluminum oxide particles is less than one third and is more than zero by weight.

2. The insert material (18) of claim 1, comprising surfactant.

3. A method for blocking flow of solder material into a void (12) of a component (10) during soldering operation, comprising:
preparing an insert material (18) in the form of a slurry comprising micro-sized metal oxide particles, nano-sized metal oxide particles, and a binder;
charging the insert material (18) into the void (12);
drying the insert material (18) in the void (12) which seals the void (12);
performing soldering operation; and
removing the insert material (18) after soldering operation;
**characterized in that**
the insert material is in the form of a slurry comprising water;
the micro-sized metal oxide particles are micro-sized aluminum oxide particles and the nano-sized metal oxide particles are nano-sized aluminum oxide particles; and
the ratio of the nano-sized aluminum oxide particles and the micro-sized aluminum oxide particles is less than one third and is more than zero by weight.

4. The method of Claim 3, wherein the insert material (18) comprises surfactant.

5. A method for blocking flow of solder material into a void (12) of a component (10) during soldering operation, comprising:
preparing an insert material (18) in the form of a slurry comprising micro-sized metal oxide particles, nano-sized metal oxide particles, and a binder;
preparing a pin (14);
coating the pin (14) with the insert material (18);
drying the insert material (18) on the pin (14);
inserting the pin (14) coated with the insert material (18) into the void (12);
performing a soldering operation; and
removing the pin (14) coated with insert material (18) after the soldering operation.

6. The method of Claim 5, wherein the insert material (18) comprises surfactant.

## Patentansprüche

1. Einsatzmaterial (18) zum Blockieren einer Strömung eines Lotmaterials in einen Hohlraum (12) einer Komponente (10) während eines Lötvorgangs, umfassend:
mikro-skalige Metalloxidteilchen;
nano-skalige Metalloxidteilchen; und
ein Bindemittel;
**dadurch gekennzeichnet, dass**
das Einsatzmaterial in der Form einer Aufschlämmung vorliegt, umfassend Wasser;
die mikro-skaligen Metalloxidteilchen mikro-skalige Aluminiumoxidteilchen sind und die nano-skaligen Metalloxidteilchen nano-skalige Aluminiumoxidteilchen sind; und
das Gewichtsverhältnis der nano-skaligen Aluminiumoxidteilchen und der mikro-skaligen Aluminiumoxidteilchen weniger als ein Drittel beträgt und mehr als Null beträgt.

2. Einsatzmaterial (18) nach Anspruch 1, umfassend ein Tensid.

3. Verfahren zum Blockieren der Strömung des Lotmaterials in einen Hohlraum (12) einer Komponente (10) während des Lötvorgangs, umfassend:
Vorbereiten eines Einsatzmaterials (18) in der Form einer Aufschlämmung, umfassend mikro-skalige Metalloxidteilchen, nano-skalige Metalloxidteilchen und ein Bindemittel;
Laden des Einsatzmaterials (18) in den Hohlraum (12);
Trocknen des Einsatzmaterials (18) in dem Hohlraum (12), das den Hohlraum (12) abdichtet;
Durchführen des Lötvorgangs; und
Entfernen des Einsatzmaterials (18) nach dem Lötvorgang;
**dadurch gekennzeichnet, dass**
das Einsatzmaterial in der Form einer Aufschlämmung vorliegt, umfassend Wasser;
die mikro-skaligen Metalloxidteilchen mikro-skalige Aluminiumoxidteilchen sind und die nano-skaligen Metalloxidteilchen nano-skalige Aluminiumoxidteilchen sind; und
das Gewichtsverhältnis der nano-skaligen Aluminiumoxidteilchen und der mikro-skaligen Aluminiumoxidteilchen weniger als ein Drittel beträgt und mehr als Null beträgt.

4. Verfahren nach Anspruch 3, wobei das Einsatzmaterial (18) das Tensid umfasst.

5. Verfahren zum Blockieren der Strömung des Lotmaterials in einen Hohlraum (12) einer Komponente (10) während des Lötvorgangs, umfassend:
Vorbereiten eines Einsatzmaterials (18) in der Form einer Aufschlämmung, umfassend mikro-skalige Metalloxidteilchen, nano-skalige Metalloxidteilchen und ein Bindemittel;
Vorbereiten eines Stifts (14);
Beschichten des Stifts (14) mit einem Einsatzmaterial (18);
Trocknen des Einsatzmaterials (18) auf dem Stift (14);
Einsetzen des Stifts (14), der mit dem Einsatzmaterial (18) in dem Hohlraum (12) beschichtet ist;
Durchführen eines Lötvorgangs; und
Entfernen des Stifts (14), der mit dem Einsatzmaterial (18) nach dem Lötvorgang beschichtet ist.

6. Verfahren nach Anspruch 5, wobei das Einsatzmaterial (18) das Tensid umfasst.

## Revendications

1. Matériau d'insert (18) permettant de bloquer l'écoulement de matériau de brasage dans un vide (12) d'un composant (10) pendant une opération de brasage, comprenant :
des microparticules d'oxyde métallique ;
des nanoparticules d'oxyde métallique ; et
un liant ;
**caractérisé en ce que**
le matériau d'insert est sous la forme d'une suspension comprenant de l'eau ;
les microparticules d'oxyde métallique sont des microparticules d'oxyde d'aluminium et les nanoparticules d'oxyde métallique sont des nanoparticules d'oxyde d'aluminium ; et
le rapport des nanoparticules d'oxyde d'aluminium et des microparticules d'oxyde d'aluminium est inférieur à un tiers et est supérieur à zéro en poids.

2. Matériau d'insert (18) selon la revendication 1, comprenant un tensioactif.

3. Procédé permettant de bloquer l'écoulement de matériau de brasage dans un vide (12) d'un composant (10) pendant une opération de soudage, comprenant :
la préparation d'un matériau d'insert (18) sous la forme d'une suspension comprenant des microparticules d'oxyde métallique, des nanoparticules d'oxyde métallique, et un liant ;
la charge du matériau d'insert (18) dans le vide (12) ;
le séchage du matériau d'insert (18) dans le vide (12) qui scelle le vide (12) ;
la réalisation d'une opération de brasage ; et
le retrait du matériau d'insert (18) après l'opération de brasage ;
**caractérisé en ce que**
le matériau d'insert est sous la forme d'une suspension comprenant de l'eau ;
les microparticules d'oxyde métallique sont des microparticules d'oxyde d'aluminium et les nanoparticules d'oxyde métallique sont des nanoparticules d'oxyde d'aluminium ; et
le rapport des nanoparticules d'oxyde d'aluminium et des microparticules d'oxyde d'aluminium est inférieur à un tiers et est supérieur à zéro en poids.

4. Procédé selon la revendication 3, dans lequel le premier matériau d'insert (18) comprend un tensioactif.

5. Procédé permettant de bloquer l'écoulement de matériau de brasage dans un vide (12) d'un composant (10) pendant une opération de brasage, comprenant :
la préparation d'un matériau d'insert (18) sous la forme d'une suspension comprenant des microparticules d'oxyde métallique, des nanoparticules d'oxyde métallique, et un liant ;
la préparation d'une broche (14) ;
le revêtement de la broche (14) avec le matériau d'insert (18) ;
le séchage du matériau d'insert (18) sur la broche (14) ;
l'insertion de la broche (14) revêtue du matériau d'insert (18) dans le vide (12) ;
la réalisation d'une opération de brasage ; et
le retrait de la broche (14) revêtue du matériau d'insert (18) après l'opération de brasage.

6. Procédé selon la revendication 5, dans lequel le matériau d'insert (18) comprend un tensioactif.
